# EUROPÄISCHE PATENTANMELDUNG

(11) **EP 2 527 932 A2**
(43) Veröffentlichungstag der Anmeldung: **28.11.2012**
(21) Anmeldenummer: 12166577.2
(22) Anmeldetag: 03.05.2012
(51) Int. Cl.: G05B 9/02

(54) **Sicherheitssensor**

(30) Priorität: 24.05.2011 DE 102011102417
(71) Anmelder: Leuze electronic GmbH + Co KG, 73277 Owen/Teck (DE)
(72) Erfinder: Brunner, Rolf, 82223 Eichenau (DE); Heckmayr, Alexander, 87724 Ottobeuren (DE)
(74) Vertreter: Ruckh, Rainer Gerhard

(57) **Zusammenfassung**

Der erfindungsgemäße Sicherheitssensor (1) umfasst wenigstens einen Schaltkontakt (2), welcher durch ein Beeinflussungselement geöffnet oder geschlossen wird. Als Sensorausgangssignal des Sicherheitssensors (1) wird ein binäres Schaltsignal generiert, dessen Schaltzustände abhängig sind, ob der Schaltkontakt (2) geöffnet oder geschlossen ist. Ein Signalgenerator (3) ist vorgesehen, welcher zeitlich variierende Testsignale generiert. Die Testsignale werden über den Schaltkontakt (2) einer Schaltstufe zugefiihrt, in welcher die durch die Überlagerung des Schaltsignals mit den Testsignalen entstehenden unterschiedlichen Signalpegel erfassbar sind. In Abhängigkeit derer Ausgangssignale generiert werden. Die Ausgangssignale werden einem Signaldecoder (5) zugeführt, in welchem aus diesen Ausgangssignalen das Schaltsignal wieder gewonnen wird. Als Sensorausgangssignal wird zusätzlich zu dem Schaltsignal eine dynamische Prüfsumme, bestehend aus den Ausgangssignalen der Schaltstufe und den Testsignalen des Signalgenerators (3), ausgegeben.

## Beschreibung

Die Erfindung betrifft einen Sicherheitssensor gemäß dem Oberbegriff des Anspruchs 1.

Derartige Sicherheitssensoren weisen generell wenigstens einen Schaltkontakt auf, welcher durch ein Beeinflussungselement geöffnet oder geschlossen werden kann. Als Sensorausgangssignal des Sicherheitssensors wird ein binäres Schaltsignal generiert, dessen Schaltzustände abhängig sind, ob der Schaltkontakt geöffnet oder geschlossen werden kann.

Die Sicherheitssensoren können dabei insbesondere als Schaltgeräte ohne eigene Signalauswertung ausgebildet sein, das heißt die Sicherheitssensoren bestehen hauptsächlich aus mechanischen Teilen. Beispiele hierfür sind Not-Aus-Taster oder Türschalter, bei welchen der Schaltkontakt durch eine mechanische Beeinflussung von außen betätigt wird.

Die Sicherheitssensoren werden generell im Bereich der Sicherheitstechnik eingesetzt. Typischerweise wird das vom Schaltkontakt des Sicherheitssensors generierte Sensorausgangssignal in die Stromzufuhr von Relais oder Schützen eingespeist, wodurch ein gefahrbringendes Arbeitsgerät in Betrieb gesetzt werden oder in einem Gefahrenfall abgeschaltet werden kann.

Dieser Ein- oder Abschaltvorgang muss den normativen Sicherheitsvorschriften entsprechen. Damit muss auch der Sicherheitssensor selbst diesen Sicherheitsvorschriften genügen, weshalb der Sicherheitssensor einen entsprechenden sicheren Aufbau aufweist. Insbesondere kann der Schaltkontakt aus Sicherheitsgründen doppelt ausgeführt sein, so dass auch bei Ausfall eines Schaltkontakts der zweite Schaltkontakt noch einsatzfähig ist, um einen Abschaltvorgang in einem Gefahrenfall durchführen zu können.

Um die Sicherheitsanforderungen für Anwendungen im Bereich der Sicherheitstechnik erfüllen zu können, ist es weiterhin erforderlich, dass von dem Sicherheitssensor sichere Daten, das heißt sichere Sensorausgangssignale ausgegeben werden. Dies bedeutet, dass die vom Sicherheitssensor ausgegebenen Sensorausgangssignale auf das Vorhandensein von Fehlern geprüft werden müssen um zu gewährleisten, dass die Sensorausgangssignale fehlerfrei zu einer externen Einheit übertragen werden. Eine derartige externe Einheit kann eine Sicherheitssteuerung sein, die das Ein- und Ausschalten von gefahrbringenden Arbeitsgeräten oder dergleichen kontrolliert.

Bei bekannten Sicherheitssensoren werden zur Erzeugung sicherer Sensorausgangssignale eines Sicherheitssensors zweikanalige, redundante Strukturen verwendet, insbesondere zwei Prozessoren oder allgemein Rechnereinheiten, die miteinander verbunden sind, um sich gegenseitig zu überwachen und bezüglich des Datenaustauschs zu synchronisieren. Zur Erzeugung sicherer Sensorausgangssignale wird in jedem Prozessor eine zeitliche Folge von Testpulsen generiert, die über den Schaltkontakt des Sicherheitssensors zum jeweils anderen Prozessor gesendet werden, der die Testpulse auswertet. Da die Testpulse über den Schaltkontakt geführt sind, werden diese dem Schaltsignal überlagert. In dem die Testpulse empfangenden Prozessor können anhand der empfangenen Signale Defekte des Sicherheitssensors wie Kurzschlüsse, Querschlüsse, Unterbrechungen von Leitungen in Sicherheitssensoren und dergleichen erfasst werden.

Die so geprüften und damit fehlersicheren Sensorausgangssignale werden in den Prozessoren mit einer Prüfsumme über diese Daten versehen und dann, beispielsweise über ein Bussystem, an eine externe Einheit ausgegeben.

Ein wesentlicher Nachteil besteht darin, dass die beiden Prozessoren, die im Sicherheitssensor integriert werden müssen oder zumindest mit diesem eine Baueinheit bilden, einen erheblichen zusätzlichen Aufwand verursachen, der zu einer unerwünschten Erhöhung der Herstellkosten des Sicherheitssensors führt.

Dabei bedingt der Einsatz zweier Prozessoren nicht nur hohen konstruktiven Aufwand. Vielmehr muss auf den Prozessoren eine den sicherheitstechnischen Anforderungen genügende Software installiert werden, was einen hohen Entwicklungsaufwand erfordert.

Der Erfindung liegt die Aufgabe zugrunde, einen Sicherheitssensor der eingangs genannten Art bereitzustellen, bei welchem mit geringem Aufwand sichere Ausgangsdaten erzeugt werden können.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Der erfindungsgemäße Sicherheitssensor umfasst wenigstens einen Schaltkontakt, welcher durch ein Beeinflussungselement geöffnet oder geschlossen werden kann. Als Sensorausgangssignal des Sicherheitssensors wird ein binäres Schaltsignal generiert, dessen Schaltzustände abhängig sind, ob der Schaltkontakt geöffnet oder geschlossen ist. Ein Signalgenerator ist vorgesehen, welcher zeitlich variierende Testsignale generiert. Die Testsignale werden über den Schaltkontakt einer Schaltstufe zugeführt, in welcher die durch die Überlagerung des Schaltsignals mit den Testsignalen entstehenden unterschiedlichen Signalpegel erfassbar sind und in Abhängigkeit derer Ausgangssignale generiert werden. Die Ausgangssignale werden einem Signaldecoder zugeführt, in welchem aus diesen Ausgangssignalen das Schaltsignal wieder gewonnen wird. Als Sensorausgangssignal wird zusätzlich zu dem Schaltsignal eine dynamische Prüfsumme, bestehend aus den Ausgangssignalen der Schaltstufe und den Testsignalen des Signalgenerators, ausgegeben.

Ein wesentlicher Vorteil der Erfindung besteht darin, dass die Schaltungsstruktur zur Generierung sicherer Daten, das heißt Sensorausgangssignale des Sicherheitssensors, mit dem Signalgenerator, der Schaltstufe und dem Signaldecoder nur wenige Schaltungskomponenten aufweist, die jeweils aus einfachen Transistorschaltungen bestehen und somit kostengünstig herstellbar sind. Weiterhin ist vorteilhaft, dass die komplette Schaltungsstruktur in Hardware realisierbar ist, so dass keine sicherheitsrelevante Software hierfür entwickelt werden muss.

Durch die hardwaremäßige Ausführung der Schaltungsstruktur ist somit kein Rechenaufwand für die Erzeugung der sicheren Daten erforderlich, so dass kurze Einschaltzeiten des Sicherheitssensors erzielt werden.

Schließlich ist vorteilhaft, dass die Schaltungsstruktur nur ein geringes Bauvolumen beansprucht, so dass diese ohne nennenswerten Aufwand im Sicherheitssensor selbst integriert werden kann.

Mit der aus dem Signalgenerator, der Schaltstufe und dem Signaldecoder bestehenden Schaltungsstruktur können Fehlfunktionen des Sicherheitssensors erfasst und aufgedeckt werden. Insbesondere können Defekte im Sicherheitssensor wie Kurzschlüsse, Querschlüsse oder Unterbrechungen in der Verkabelung des Sicherheitssensors aufgedeckt werden. Das Grundprinzip der Fehlererkennung besteht darin, dass mit dem Signalgenerator generierte, zeitlich variierende Testsignale über den Schaltkontakt geleitet und dann der Schaltstufe zugeführt werden. Dadurch werden den Schaltsignalen, die vom Schaltkontakt generiert werden, die Testsignale in definierter Weise überlagert, so dass außer den Pegeln der Schaltsignale weitere verschiedene Signalpegel an der Schaltstufe anliegen. Die in der Schaltstufe generierten Ausgangssignale hängen in definierter Weise von den vom Schaltkontakt generierten Schaltsignalen und den Testsignalen, die den Schaltsignalen überlagert werden ab. Dies bedeutet, dass durch einen Vergleich der Ausgangssignale mit den den fehlerfreien Fall definierenden Sollwerten Fehler im Sicherheitssensor aufgedeckt werden können.

Gemäß einer besonders vorteilhaften Ausführungsform der Erfindung sind die Testsignale von einer periodischen Folge von Testpulsen mit binären Signalzuständen gebildet.

Damit können bei der Überlagerung der Schaltsignale durch die Testpulse nur drei unterschiedliche Signalpegel an der Schaltstufe anstehen. Vorteilhaft ist daran angepasst die Schaltstufe von einer Tri-State-Stufe gebildet, mittels derer drei unterschiedliche Signalpegel erfassbar sind, und welche zwei Ausgänge aufweist, an welchen jeweils ein binäres Ausgangssignal ausgebbar ist.

Dann weisen bei geöffnetem Schaltkontakt die Ausgangssignale der Tri-State-Stufe denselben Schaltzustand auf. Bei geschlossenem Schaltkontakt weisen die Ausgangssignale der Tri-State-Stufe unterschiedliche Signalzustände auf, die abhängig von den Signalzuständen der Testsignale sind.

Generell kann durch eine Analyse der Ausgangssignale der Schaltstufe, insbesondere der Tri-State-Stufe, erfasst werden, ob in dem Sicherheitssensor ein Fehler vorliegt.

Weiterhin wird aus den Ausgangssignalen der Schaltstufe das Sensorausgangssignal, das heißt das binäre Schaltsignal, das durch die Stellung des Schaltkontakts bestimmt ist, im Signaldecoder wieder gewonnen.

Wesentlich ist, dass dieses wieder gewonnene Schaltsignal mit einer Prüfsumme abgesichert, das heißt sicher an eine externe Einheit ausgelesen wird. Die Prüfsumme besteht dabei erfindungsgemäß aus den Ausgangssignalen der Schaltstufe, insbesondere Tri-State-Stufe, und den Testpulsen des Signalgenerators. Damit kann anhand dieser ausgelesenen Daten in der externen Einheit eine Fehlerprüfung des Sicherheitssensors durchgeführt werden. Da somit die Auswertung der von der Schaltstufe generierten Ausgangssignale in die externe Einheit verlagert ist, braucht im Sicherheitssensor keine Rechnereinheit zur Auswertung dieser Daten vorgesehen sein. Besonders vorteilhaft erfolgt die Ausgabe der Daten an die externe Einheit über ein Sicherheits-Bussystem.

Die Erfindung wird im Folgenden anhand der Zeichnungen erläutert. Es zeigen:
- Figur 1:: Schematische Darstellung eines Sicherheitssensors mit einer Schaltstruktur zur Fehlererkennung.
- Figur 2:: Zustandstabelle von Elementen der Anordnung gemäß Figur 1.

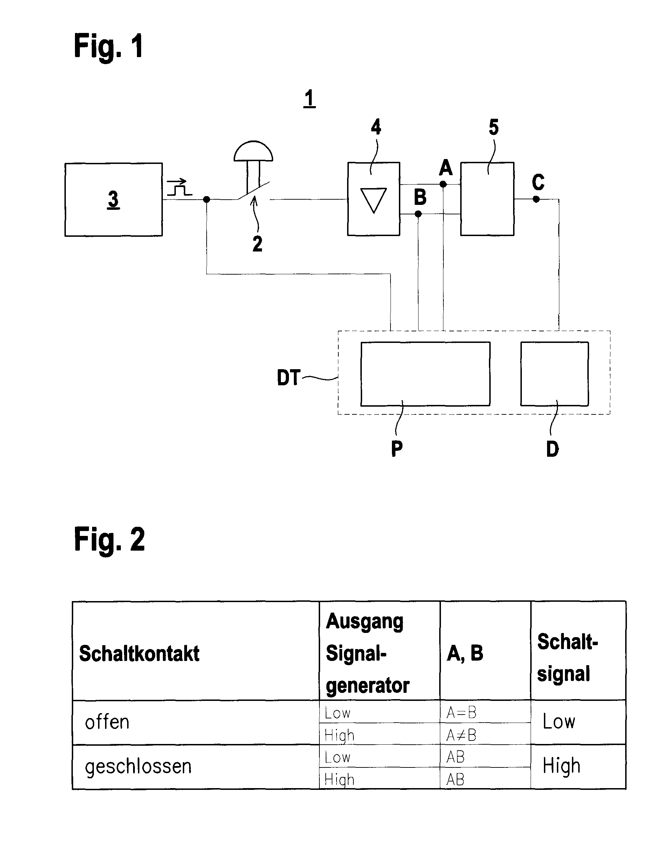

Figur 1 zeigt einen Sicherheitssensor 1, das heißt ein Sicherheitsschaltgerät, welches im vorliegenden Fall von einem Not-Aus-Taster gebildet ist. Generell kann der Sicherheitssensor 1 bevorzugt als mechanischer Sicherheitssensor 1 ausgebildet sein, der im Wesentlichen nur aus mechanischen Komponenten besteht und keine eigene Rechnereinheit zur Signalauswertung aufweist. Ein weiteres Beispiel für einen derartigen Sicherheitssensor 1 ist ein Türschalter.

Der Sicherheitssensor 1 in Form des Not-Aus-Tasters weist ein mechanisches Betätigungselement auf. Durch die mechanische Betätigung wird ein Schaltkontakt 2 geöffnet oder geschlossen. Zur Erfüllung der Anforderungen für den Einsatz im Bereich der Sicherheitstechnik ist der Schaltkontakt 2 doppelt, das heißt redundant vorgesehen.

Mit dem Sicherheitssensor 1 wird als Sensorausgangssignal ein binäres Schaltsignal generiert, dessen beide Schaltzustände durch die Schalterstellung des Schaltkontakts 2 bestimmt sind. Ist der Schaltkontakt 2 offen, nimmt das Schaltsignal den Schaltzustand "low", das heißt "0" an, was einem entsprechend niedrigen Spannungspegel entspricht. Ist der Schaltkontakt 2 geschlossen, nimmt das Schaltsignal den Schaltzustand "high", das heißt "1" an, was einem entsprechend hohen Spannungspegel entspricht.

Das Schaltsignal des Sicherheitssensors 1 wird über ein nicht dargestelltes Sicherheits-Bussystem an eine externe Einheit, insbesondere eine Sicherheitssteuerung, ausgelesen. Mittels der Sicherheitssteuerung können insbesondere in Abhängigkeit des Schaltsignals des Sicherheitssensors 1, Relais oder Schütze angesteuert werden, um beispielsweise gefahrbringende Maschinen oder Anlagen in Betrieb zu setzen oder abzuschalten.

Wie aus Figur 1 ersichtlich, ist dem Sicherheitssensor 1 eine Schaltungsstruktur zur Aufdeckung von Fehlern des Sicherheitssensors 1 zugeordnet. Bevorzugt kann die Schaltungsstruktur im Sicherheitssensor 1 integriert sein oder zumindest mit diesem eine Baueinheit bilden.

Die Schaltungsstruktur umfasst einen Signalgenerator 3, eine Schaltstufe in Form einer Tri-State-Stufe 4, sowie einen Signaldecoder 5. Der Signalgenerator 3 besteht vorzugsweise aus einem Flip-Flop, die Tri-State-Stufe 4 und der Signaldecoder 5 bestehen vorzugsweise aus Transistor-Schaltungen.

Mit dem Signalgenerator 3 werden Testsignale in Form einer periodischen, zeitlichen Folge von Testpulsen mit binären Signalzuständen generiert. Der erste Signalzustand "low" beziehungsweise "0" entspricht einem Spannungspegel Null, der zweite Signalzustand "high" beziehungsweise "1" entspricht einem Spannungspegel, der von dem Spannungspegel "high" des Schaltsignals verschieden ist.

Die vom Signalgenerator 3 generierten Testpulse werden über den Schaltkontakt 2 geführt und dann auf den Eingang der Tri-State-Stufe 4 geführt. Ist der Schaltkontakt 2 geöffnet, werden die Testpulse nicht zur Tri-State-Stufe 4 geführt, entsprechend liegt dann am Eingang der Tri-State-Stufe 4 der dem Schaltzustand "low" des Schaltsignals entsprechende Signalpegel, das heißt Spannungspegel an. Ist der Schaltungskontakt 2 dagegen geschlossen, werden die Testpulse über diesen Schaltkontakt 2 geführt und überlagern sich dem Schaltsignal in dessen Schaltzustand "high". Damit können am Eingang der Tri-Sate-Stufe 4 drei verschiedene Signalpegel anliegen. Die Tri-State-Stufe 4 ist hieran angepasst, da mit dieser drei unterschiedliche Signalpegel erfasst werden können. Die Tri-State-Stufe 4 weist zwei Ausgänge A, B auf, über welche jeweils ein binäres Ausgangssignal ausgegeben wird. Die Ausgangssignale weisen jeweils einen Signalzustand "low" beziehungsweise "0" und einen Signalzustand "high" beziehungsweise "1" auf.

Die Ausgangssignale der Tri-State-Stufe 4 werden dem Signaldecoder 5 zugeführt. Dort werden die Ausgangssignale miteinander verknüpft, um aus diesen wieder das Schaltsignal des Sicherheitssensors 1 zu regenerieren, dass dann über einen Ausgang C des Signaldecoders 5 ausgegeben wird.

Mit den an den Ausgängen A, B der Tri-State-Stufe 4 generierten Ausgangssignalen kann eine Fehlerkontrolle des Sicherheitssensors 1 durchgeführt werden. Figur 2 zeigt die hierfür verwendete Zustandstabelle mit den Beziehungen der Schalterstellung des Schaltkontakts 2, den Signalzuständen der Testpulse am Ausgang des Signalgenerators 3, den Signalzuständen der Ausgänge A, B der Tri-Sate-Stufe 4 und den in dem Signaldecoder 5 regenerierten Schaltsignalen. Dabei zeigt die Tabelle den fehlerfreien Fall. Fehler im Sicherheitssensor 1 können durch Abweichungen von diesen Signalzuständen aufgedeckt werden.

Ist der Schaltkontakt 2 offen, so gelangen die Testpulse nicht zum Eingang der Tri-State-Stufe 4. Dementsprechend nehmen die Ausgänge A, B der Tri-State-Stufe 4 unabhängig von den Pegeln "low" oder "high" der im Signalgenerator 3 generierten Testpulse denselben Signalzustand ein. Daraus wird im Signaldecoder 5 das Schaltsignal mit dem Schaltzustand "low" regeneriert, entsprechend der offenen Stellung des Schaltkontakts 2.

Ist der Schaltkontakt 2 geschlossen, gelangen die Testpulse über den Schaltkontakt 2 zum Eingang der Tri-State-Stufe 4 und überlagern sich dem Pegel des Schaltsignals. In diesem Fall werden an den Ausgängen A, B immer unterschiedliche Schaltzustände erhalten, wobei die Schaltzustände für den Fall, dass am Ausgang des Signalgenerators 3 der Signalzustand "high" anliegt, andere Signalzustände an den Ausgängen erhalten werden als für den Fall, dass am Ausgang des Signalgenerators 3 der Signalzustand "low" anliegt. Damit aber liefern im fehlerfreien Fall die Ausgangssignale an den Ausgängen A, B der Tri-State-Stufe 4 eine direkte, eindeutige Antwort auf die Signalwechsel der Folge der Testpulse.

In einer Ausgabeeinheit, insbesondere einer Schnittstelleneinheit zum Anschluss des Sicherheitssensors 1 an das Sicherheitsbussystem, werden, wie in Figur 1 schematisch dargestellt, die Ausgangsignale an den Ausgängen A, B der Tri-State-Stufe 4 mit den Signalen des Signalgenerators 3, das heißt den Testpulsen, zusammengefasst und zur Berechnung einer Prüfsumme P verwendet. Diese Prüfsumme P wird zusammen mit dem im Signaldecoder 5 regenierten Schaltsignal als sichere Daten D zu einem Datentelegramm DT zusammengefasst und an die Sicherheitssteuerung als externe Einheit übertragen. Dort erfolgt die Auswertung der sicheren Daten mit der Prüfsumme und damit die Fehlerkontrolle des Sicherheitssensors 1, da die Prüfsumme alle für die Fehlerkontrolle relevanten Daten, die mit den Signaldecodern 5 und der Tri-State-Stufe 4 erzeugt wurden, enthält.

Leuze electronic GmbH + Co. KG 73277 Owen/Teck, DE

### Bezugszeichenliste

- (1): Sicherheitssensor
- (2): Schaltkontakt
- (3): Signalgenerator
- (4): Tri-State-Stufe
- (5): Signaldecoder

## Patentansprüche

1. Sicherheitssensor (1) mit wenigstens einem Schaltkontakt (2), welcher durch ein Beeinflussungselement geöffnet oder geschlossen werden kann, wobei als Sensorausgangssignal des Sicherheitssensors (1) ein binäres Schaltsignal generiert wird, dessen Schaltzustände abhängig sind, ob der Schaltkontakt (2) geöffnet oder geschlossen ist, **dadurch gekennzeichnet, dass** ein Signalgenerator (3) vorgesehen ist, welcher zeitlich variierende Testsignale generiert, die über den Schaltkontakt (2) einer Schaltstufe zugeführt werden, in welcher die durch die Überlagerung des Schaltsignals mit den Testsignalen entstehenden unterschiedlichen Signalpegel erfassbar sind und in Abhängigkeit derer Ausgangssignale generiert werden, die einem Signaldecoder (5) zugeführt werden, in welchem aus diesen Ausgangssignalen das Schaltsignal wieder gewonnen wird, und dass als Sensorausgangssignal zusätzlich zu dem Schaltsignal eine dynamische Prüfsumme, bestehend aus den Ausgangssignalen der Schaltstufe und den Testsignalen des Signalgenerators (3), ausgegeben wird.

2. Sicherheitssensor nach Anspruch 1, **dadurch gekennzeichnet, dass** die Testsignale von einer periodischen Folge von Testpulsen mit binären Signalzuständen gebildet sind.

3. Sicherheitssensor nach einem der Ansprüche 1 oder 2, **dadurch gekennzeichnet, dass** die Schaltstufe von einer Tri-State-Stufe (4) gebildet ist, mittels derer drei unterschiedliche Signalpegel erfassbar sind, und welche zwei Ausgänge aufweist, an welchen jeweils ein binäres Ausgangssignal ausgebbar ist.

4. Sicherheitssensor nach Anspruch 3, **dadurch gekennzeichnet, dass** bei geöffnetem Schaltkontakt (2) die Ausgangssignale der Tri-State-Stufe (4) denselben Schaltzustand aufweisen, und dass bei geschlossenem Schaltkontakt (2) die Ausgangssignale der Tri-State-Stufe (4) unterschiedliche Signalzustände aufweisen, die abhängig von den Signalzuständen der Testsignale sind.

5. Sicherheitssensor nach einem der Ansprüche 1 bis 4, **dadurch gekennzeichnet, dass** der Schaltkontakt (2) doppelt ausgeführt ist.

6. Sicherheitssensor nach einem der Ansprüche 1 bis 5, **dadurch gekennzeichnet, dass** der Signalgenerator (3), die Schaltstufe und der Signaldecoder (5) in diesem integriert sind oder mit diesem eine Baueinheit bilden.

7. Sicherheitssensor nach einem der Ansprüche 1 bis 6, **dadurch gekennzeichnet, dass** die Sensorausgangssignale in einer externen Einheit ausgewertet werden.

8. Sicherheitssensor nach einem der Ansprüche 1 bis 7, **dadurch gekennzeichnet, dass** die Sensorausgangssignale zu Datentelegrammen zusammengefasst sind und über ein Bussystem ausgegeben werden.

9. Sicherheitssensor nach Anspruch 8, **dadurch gekennzeichnet, dass** die externe Einheit eine Sicherheitssteuerung eines als Sicherheits-Bussystem ausgebildeten Bussystems ist.

10. Sicherheitssensor nach einem der Ansprüche 1 bis 8, **dadurch gekennzeichnet, dass** dieser ein Schaltgerät ohne eigene Signalauswertung ist.
